# EUROPEAN PATENT APPLICATION

(11) **EP 2 942 176 A1**
(43) Date of publication of application: **11.11.2015**
(21) Application number: 13866518.7
(22) Date of filing: 24.12.2013
(51) Int. Cl.: B29C 45/56, B29C 45/37, B29K 105/06

(54) **INJECTION MOLDING METHOD AND INJECTION-MOLDED ITEM**

(30) Priority: 25.12.2012 JP 2012281253
(71) Applicant: Nisshin Industrial Ltd., Ota-ku Tokyo 146-0083 (JP)
(72) Inventor: TAKEMOTO Shigeru, Tokyo 146-0083 (JP)
(74) Representative: Brevalex
(86) International application number: PCT/JP2013/084547
(87) International publication number: WO 2014/104043

(57) **Abstract**

Provided are an injection molding method to control the orientation of a filler (a) and an injection molded article using the same. An injection molding method including using a mold (11) arranged with a first gap (11) and a pulling mechanism (15) arranged in a second gap (13) connected to the first gap, the method includes placing the pulling mechanism so that a apace is not created between the first gap and the pulling mechanism, and filling a molding material (3) containing a filler in the first gap of the mold, and when the molding material flowing from a first direction of the first gap and the molding material flowing from a second direction different from the first direction are in close contact, pulling a part of the molding material into the second gap by pulling the pulling mechanism.

## Description

### TECHNICAL FIELD

The present invention is related to an injection molding method and an injection molded article using the same. In particular, the present invention is related to an injection molding and injection molding method in which the orientation of a filler is controlled and an injection molded product using the method.

### BACKGROUND ART

The technology of injection molding in which a molten molding material is fed into a mold and solidified is one of the techniques that Japan is proud of in the world. In injection molding, an injection molded article having a metallic appearance is molded by mixing a filler material such as aluminum, mica, glass flakes with a molding material such as resin is used as a method for obtaining a relatively inexpensive, high-quality texture without using a process such as plating or coating. Such a technique of adding a filler to improve the strength of the injection molded article has been generally used from a long time ago. However, an injection molded article with the addition of a filler generally suffers from linear scars called a weld line on the surface and has been a cause of defects such as strength reduction and disfiguring.

This type of defect occurs in the weld line when the molding material containing a filler is joined by flowing from a different direction from the mold cavity and the filler flows along the joining plane, i.e. when orientated directly in the flow direction of the injection molded article. In addition, in the case where a filler is aluminum or the like (flake, thin plate) that is intended for generating a high luminance color tone, the direction of a filler surface is oriented in parallel to the flowing direction, giving an injection molded article a fine metallic appearance. However, due to the turbulence of the flow when the molding materials meeting in the cavity of the mold, the orientation of the filler is disturbed, and the flow line (lines with no reflection of light, dark line, current marks, uneven coloring) is generated and attractive appearance is sometimes lost.

Various efforts have been reported to prevent weld lines caused by the orientation defect of such fillers. For example, a method is described in Patent Document 1 in which when the molten molding materials containing metal particles which are pressed from a plurality of gates included in the cavity of the metal mold meet each other, after stopping with a time difference each press-fitting of the molten molding material from a plurality of gates so that one of the flow pressure of the molten molding material in one of the two gates in which the two molten molding materials to meet each other becomes smaller than the other, and meeting the melt molding material, the metal particles in the converging part of the flow front part of the molten molding material are aligned along the flow direction at the surface of the molten molding material by flowing the flow pressure from the larger to the smaller.

Further, in Patent Document 2, a flow weir is retractably arranged with respect to the cavity to restrict the flow of a resin, the flow weir is injected into the cavity, and in a state where the flow of resin into a certain restricted area in the cavity is restricted, the molten resin is injected into the cavity and after injection begins, by extracting the flow weir from the cavity and moving flow weir to a position where the flow of the resin is not restricted, weld at a location other than the restricted area and an orientation line which is a flow pattern of the resin are prevented.

A method is described in Patent Document 3 in which a thermoplastic resin flows in opposite directions in a cavity when injection molding at the corner outer peripheral part of a mold having a corner part, by integrally projecting a projection part via a narrow part so as to be located from a joining part in which one of the flows exceeds the corner part of the cavity corresponding to the corner part and meets the other flow at a position close to the corner part to an extension line of the flow direction downstream side of the other flow, turbulence is produced in the flow of the thermoplastic resin at the joining part, and orientation turbulence also occurs in a glaze material that is contained in the thermoplastic resin, the flow of the thermoplastic resin disturbed once due to joining is introduced into a resin reservoir and is corrected in the same direction as the other flow, the orientation of the glaze is corrected and aligned in one direction along the flow of the thermoplastic resin.

Further, in Patent Document 4, a method described in which the temperature of a mold is kept above a heat distortion temperature of a thermoplastic resin temperature, the thermoplastic resin is put into a state in which it flows easily, after injection of the thermoplastic resin while the mold is open, compression in the thickness direction is applied by the operation of a clamp, thereby the thermoplastic resin is allowed to flow and is changed so that orientation turbulence of the glaze material occurring during injection becomes aligned and weld lines or flow lines are suppressed.

### CITATION LIST

### PATENT LITERATURE

Patent Document 1: Japanese Laid Open Patent 2011-218674
Patent Document 2: Japanese Laid Open Patent 2012-016944
Patent Document 3: Japanese Laid Open Patent 2006-224461
Patent Document 4: Japanese Laid Open Patent 2011-088284

### SUMMARY OF INVENTION

### TECHNICAL PROBLEM

However, in either method, not in the case of sufficiently suppressing strength reduction or poor appearance of a weld line part and a flow line (lines with no reflection of light, dark line, current marks, uneven coloring) occurring in an injection molded article using a filler added material but particularly in the case of a metallic tone material, in order to obtain a product without applying plating or paint, there is a problem in that the type of resin material is limited and further improvements were necessary.

The present invention solves the problems described above and provides an injection molding method to control the orientation of a filler and an injection molded article using the same.

### SOLUTION TO PROBLEM

According to one embodiment of the present invention, an injection molding method is provided including using a mold arranged with a first gap and a pulling mechanism arranged in a second gap connected to the first gap, the method includes placing the pulling mechanism so that space is not created between the first gap and the pulling mechanism, and filling a molding material containing a filler in the first gap of the mold, and when the molding material flowing from a first direction of the first gap and the molding material flowing from a second direction different from the first direction are in close contact, pulling a part of the molding material into the second gap by pulling the pulling mechanism.

In the injection molding method, the filler may have an anisotropic shape.

In the injection molding method, pulling a part of the molding material into the second gap by pulling the pulling mechanism may be carried out by applying negative pressure to the second gap.

In the injection molding method, the molding material filled in the first gap may be filled into the second gap to form a rib or boss.

In the injection molding method, pulling a part of the molding material to the second gap by pulling the pulling mechanism may be acheived by pulling the filler near the surface and the molding material to the second gap side.

In addition, according to one embodiment of the present invention, an injection molded article is provided formed by any one of the methods described above.

### ADVANTAGEOUS EFFECTS OF INVENTION

In accordance with the present invention, it is possible to provide an injection molded article using the same injection molding and a method to control the surface orientation of the filler.

### BRIEF DESCRIPTION OF DRAWINGS

Fig. 1 is a schematic diagram showing an injection molding method according to the present invention.
Fig. 2 is a schematic view showing an injection molding method according to one embodiment of the present invention, (a) is a schematic diagram showing a mold 19 and a pulling mechanism 15 and (b) is a sectional view of AA' in (a).
Fig. 3 is a schematic diagram showing an injection molding method according to one embodiment of the present invention.
Fig. 4 is a schematic view showing an injection molding method according to one embodiment of the present invention, (a) is a schematic diagram showing a mold 19 and pulling mechanism 25 and (b) is a sectional view of AA' in (a).
Fig. 5 is a schematic view showing an injection molding method according to one embodiment of the present invention, (a) is a schematic diagram showing a mold 19 and pulling mechanism 35 and (b) is a sectional view of AA' in (a).
Fig. 6 is a diagram showing an injection-molded article of a comparative example (a) shows the injection-molded article 800 of the comparative example, (b) is an enlarged view of a part of 810 in (a), and (c) shows the injection-molded article 900 of the comparative example.
Fig. 7 is a diagram showing an injection molded article according to one example of the present invention, (a) shows the injection-molded article 100 of the present example, and (b) shows the injection-molded article 200 of the present example.
Fig. 8 is a diagram showing an injection molded article according to one example of the present invention, (a) shows the injection-molded article 100 of the present example, and (b) shows the injection-molded article 800 of a comparative example.
Fig. 9 is a schematic diagram showing a state in which a weld line is caused by a conventional injection molding method of the prior art.
Fig. 10 is a schematic diagram showing an injection molded article according to one example of the present invention.

### DESCRIPTION OF EMBODIMENTS

An injection molding method an injection molded articles related to an embodiment of the present invention is explained below with reference to diagrams. Furthermore the following embodiment is an example of the injection molding method and injection molded article of the present invention, and the injection molding method and injection molded article of the present invention are not limited to the following embodiments.

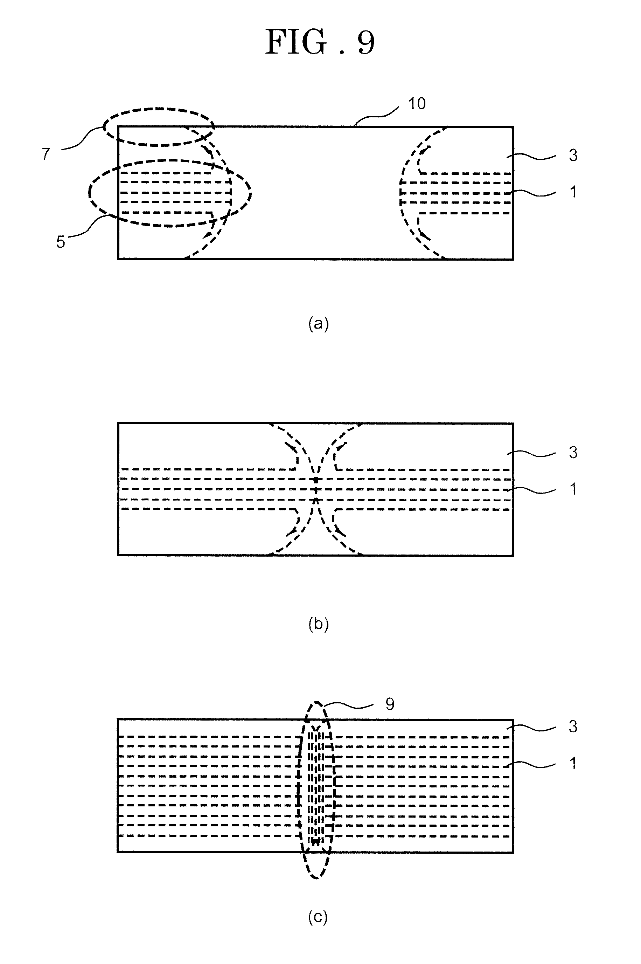

Here, a mechanism in which a weld line occurs in injection molding is discussed. Fig. 9 is a schematic diagram showing a state in which a weld line is caused by a conventional injection molding method. When molding material 3 containing a filler 1 flows into a cavity 10 of a mold, a fountain flow supplying the filler 1 and molding material 3 toward the end part of the fluid occurs. This is for supplying the molding material 3 with filler 1 toward the end part from a fluid layer 5 near the center of the fluid, and at a surface layer 7 in contact with the cavity 10, a skin layer is formed by solidifying slightly. At this time, when the molding material 3 with filler 1 is solidified at the surface layer 7 supplied toward the end part from the fluid layer 5, the long axis of the filler 1 is oriented in the flow direction of the fluid (Fig. 9(a)).

Filler 1 and the molding material 3 which flow into the cavity 10 meet from different directions (at least 2 directions) and are filled into the cavity 10(Fig. 9(b)). The filler 1 oriented toward the surface 7 from the end part of the fluid by the fountain flow becomes oriented along a joining plane when joining from two directions. Because the filler 1 oriented along the joining plane and the filler 1 oriented in the flow direction of the fluid at the surface layer 7 are oriented orthogonally, a weld line 9 is produced and thus a good appearance is lost (Fig. 9(c)).

In the prior art described above, by being pushed the molding material that flows from one direction into the molding material that flows from the other direction and being pushed into space connected to interior of the cavity 10 (also referred to as cavity to discard), weld lines are prevented. However, in such methods, because the filler 1 and molding material 3 solidify at the surface layer 7, the fluid layer 5 cannot be moved and the weld line 9 and a flow line occur as a result. In addition, even by heating the mold at this time and increasing the fluidity of the surface layer 7, in the prior art described above, control near the surface 7 is difficult, appearance defects such as the generation of paddings called burrs, and dents in the surface of the injection molding article called a sink occur.

In order to suppress weld lines and flow line, the present inventors have paid attention to the necessity of moving the filler 1 and molding material 3 near the surface 7. The inventors of the present invention found that instead of using the conventional method of pressing the molding material that flows from one direction into the molding material flowing from the other direction, by pulling the molding material flowing from one direction to the side of the molding material flowing from the other direction, it is possible to suppress weld lines and flow lines from occurring to the extent that they are not visible to the naked eye, that is, they completed the present invention by finding that it is possible to control orientation near the skin layer of an injection molded article. The method of moving by pulling the molding material flowing from one direction to the molding material side flowing from the other direction is the reverse principle to the pushing method reported in the prior art and is a novel method.

In the present invention, the filler has an anisotropy shape and is a fibrous material or a scaly material with one longer than the other. Useful fillers in the present invention include talc (mica, isinglass, etc.), glass fibers, carbon fibers, carbon nanotubes and the like. The present invention is not a technology which can be applied only to injection molded articles having a metallic color tone but can also be applied to injection molded articles in general containing a filler, and in which the desired properties are obtained by orientating the filler. For example, desired strength can be provided to the injection molded article by including glass fibers, carbon fibers, carbon nanotubes, etc. In the prior art described above, it was not possible for these fillers to express functions such as improved strength and electrical conductivity due to the orientation of a weld line part. The present invention is a technique capable of expressing the desired function to improve orientation at a weld line.

Furthermore, if the injection moldable material related to the present invention is a material that can be injection molded, there is no particular limitation and a known material can be used.

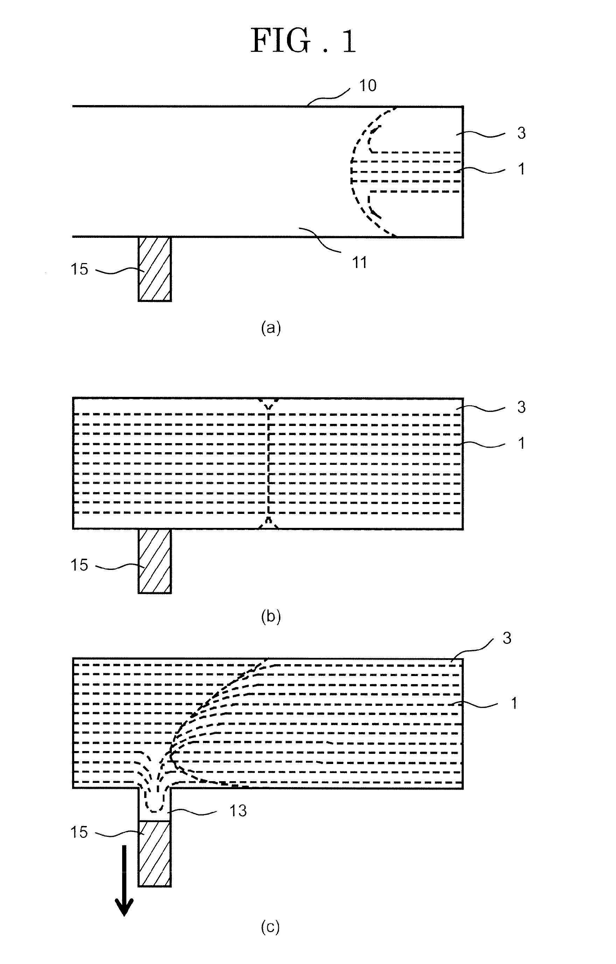

Fig. 1 is a schematic diagram showing an injection molding method related to the present invention. The molding material 3 including a filler 1 is filled into a mold cavity (first gap). A pulling mechanism 15 connected to the fist gap is arranged in the mold. Pulling mechanism 15 is a mechanism for forming a second gap connected to the first gap by a drive mechanism arranged outside the mold and a control mechanism for controlling the drive mechanism (not shown in the diagram).

When filling the molding material 3 containing filler 1 in the first gap 11 of the mold, the pulling mechanism 15 takes an arrangement in close proximity to the first gap to an extent that the second gap doesn't occur or slightly occurs (Fig. 1(a)). In the present invention, when the molding material 3 containing filler 1 is filled into the first gap 11 of the mold, the molding material 3 flowed from one direction of the first gap (first direction) and the molding material 3 flowed from the other direction (second direction different from the first direction) adhere together (Fig. 1(b)), a second gap 13 connected to the first gap 11 is formed, a part of the molding material 3 filled into the first gap 11 is pulled in and is moved in either the first direction or second direction (Fig. 1(c)). The second gap 13 can be formed by driving the pulling mechanism 15 using the drive mechanism.

As described above, the conventional pushing method could only move the fluid layer 5. On the other hand, in the injection molding method related to the present invention, by driving the pulling mechanism 15 when the molding material 3 flowed from the two directions are in close contact, and making either of them a negative pressure, the molding material 3 from the other direction is pulled in one direction. In the injection molding method related to the present invention, the filler 1 at the surface layer 7 is in a state oriented along the direction of the flow of a fluid, and by pulling the filler 1 and the molding material 3 not only at the fluid layer 5 but also near the surface layer 7, it is possible to suppress the weld line 9 and flow line from occurring.

In the injection molding method related to the present invention, it is possible to pull a part of the molding material 3 filled in the first gap 11 and move the molding material to one of either a first direction or second direction by reducing the pressure of one of either the first direction or the second direction. That is, by reducing the pressure of any one, negative pressure is generated on the side where the pressure was reduced, and it is possible to pull the filler 1 and molding material 3 not only at the fluid layer 5 but also near the surface layer 7.

In addition, pulling a part of the molding material 3 filled in the first gap 11 and moving the molding material 3 to one of either a fist direction or second direction is preferred to be performed when the molding material 3 which flows from the first direction of the first gap 11 is in close contact with the molding material 3 which flows from the second direction different from the first direction. By moving the molding material 3 by pulling the molding material 3 in one direction when the molding material 3 flowed from the two directions are in close contact, it is possible to pull the filler 1 and molding material 3 in one direction not only at the fluid layer 5 but also near the surface layer 7 and it is possible to suppress the weld line 9 and the flow line from occurring.

In addition, pulling a part of the molding material 3 filled in the first gap 11 and moving the molding material 3 in one of either a first direction or a second direction, can be performed by forming a second gap 13, making the second gap 13 a negative pressure, and pulling a part of the molding material 3 into the second gap 3. In this way, a negative pressure is formed on the side where the second gap 13 is generated by pulling a part of molding material 3 into the second gap 13, and it is possible to pull the filler 1 and molding material 3 in one direction not only at the fluid layer 5 but also near the surface layer 7 and it is possible to suppress the weld line 9 and the flow line from occurring.

Furthermore, the present invention is not limited to only pulling the molding material 3 in one direction to suppress the weld line 9 and flow line from occurring, the present invention also includes moving the weld line 9 and flow line in a surface other than a design surface of the injection molded articles by pulling a part of the molding material 3 into the second gap 13, making the side on which the second gap 13 is generated a negative pressure and pulling the filler 1 and molding material 3 in one direction not only at the fluid layer 5 but also near the surface layer 7.

According to the present invention, it is possible to control the orientation of filler to form an injection molded article capable of suppressing weld lines and flow lines from occurring.

### (Embodiment 1)

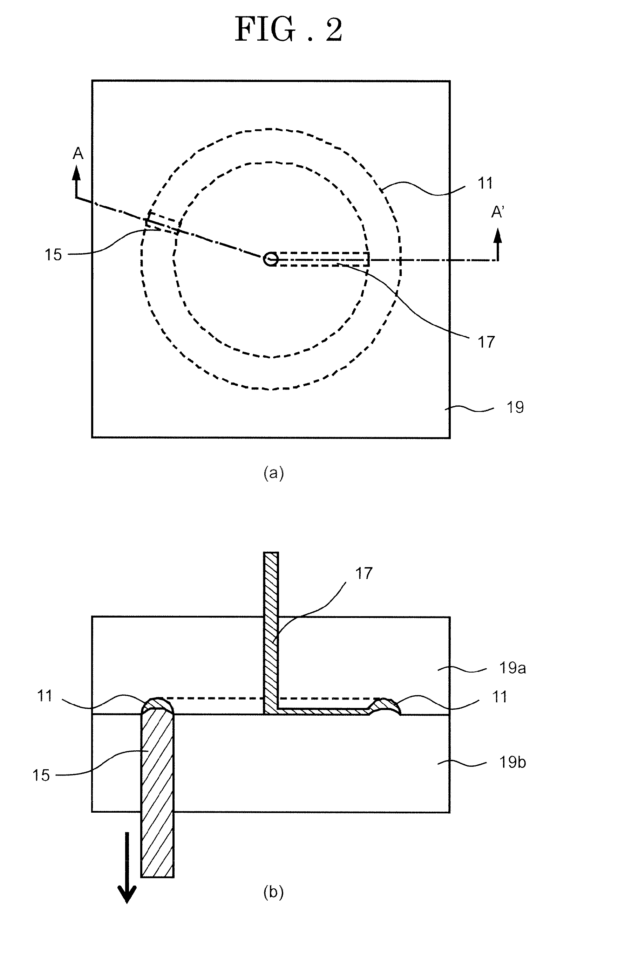

Fig. 2 is a schematic diagram showing an injection molding method related to one embodiment of the present invention. Fig. 2(a) is a schematic diagram showing a mold 19 and pulling mechanism 15, Fig. 2(b) is a cross-sectional view taken along AA' in Fig. 2(a). Mold 19 is generally formed by an upper mold 19(a) and lower mold 19(b). An injection molded article is removed from the mold 19 by separating the mold 19(a) and the mold 19(b). An injection hole 17 for pouring the molding material 3 containing the filler 1 is arranged in the mold 19 and is connected to the first gap 11.

The pulling mechanism 15 connected to first gap 11 is arranged in the mold 19 and takes a position close to the first gap 11 to the extent that the second gap 13 does not occur or slightly occurs. In the present invention, when the molding material 3 which joins from different directions in the first gap 11 are in close contact, the molding material 3 containing a filler 1 is pulled drawn in one direction. In addition, in the present invention, if it is possible to pull the molding material 3 containing a filler 1 when the molding material 3 is in close contact, the arrangement position of the pulling mechanism 15 is not particularly limited. Therefore, the pulling mechanism 15 may be arranged misaligned to either side with respect to the joining position of the molding material 3, and may also be arranged directly below the joining position.

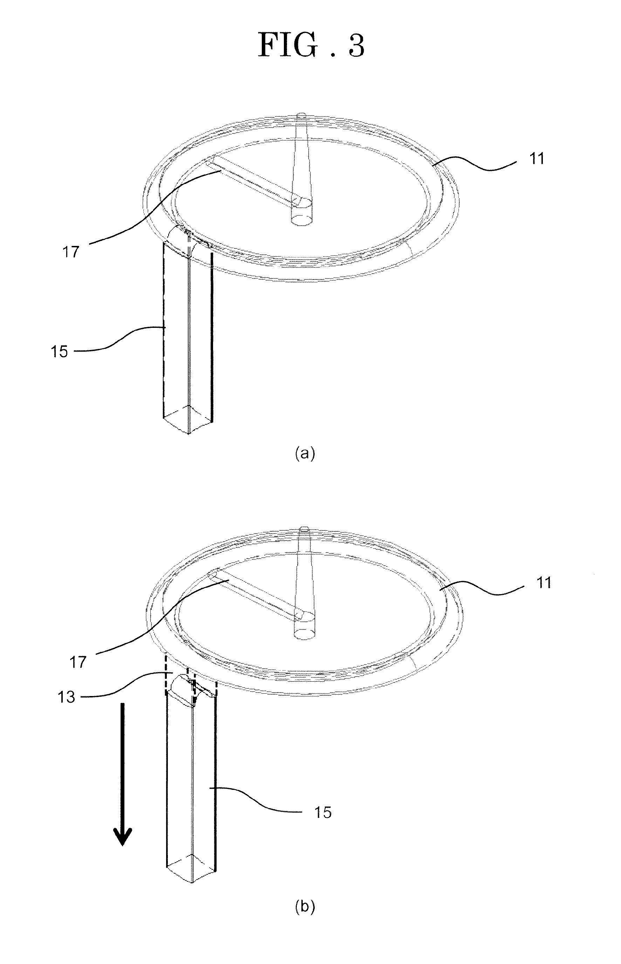

As shown in Fig. 3(a), when molding material 3 containing a filler 1 flows from the injection hole 17, in the mold 19, the pulling mechanism 15 takes a position close to the first gap 11 so that the second gap 13 does not occur or slightly occurs. When the molding material 3 which joins from different directions in the first gap 11 are in close contact, for example, the pulling mechanism 15 is pulled downward by a driving mechanism which is arranged externally, the second gap 13 is produced and molding material 3 including the filler 1 is pulled into the second gap 13. In this way, negative pressure is produced, and it is possible to move the filler 1 and molding material 3 not only at the fluid layer 5 but also near the surface layer 7 by pulling in one direction. Furthermore, the pulling mechanism 15 may be a structure in which when the inside exceeds a predetermined pressure by filling the molding material 3 including filler 1 into the first gap 11, the pulling mechanism 15 moves downwards and the second gap 13 is produced.

In the present embodiment, the distance by which the pulling mechanism 15 is pulled down, that is, the amount the molding material 3 including a filler 1 is pulled in one direction, can be any amount that suppresses the weld line 9 and flow line from occurring and can be determined experimentally using mold 19. In addition, when the molding material 3 which joins from different directions in the first gap 11 are in close contact, it is preferred to increase negative pressure by instantly driving the pulling mechanism 15 in order to pull the molding material 3 including filler 1 in one direction, and, the time of driving the pulling mechanism 15 can be determined experimentally using mold 19. Here, when the molding material 3 which joins from different directions in the first gap 11 are in close contact, it is possible make an inverse calculation from the driving time of the pulling mechanism 15 which can suppress weld line 9 from occurring using a mold 19.

### (Embodiment 2)

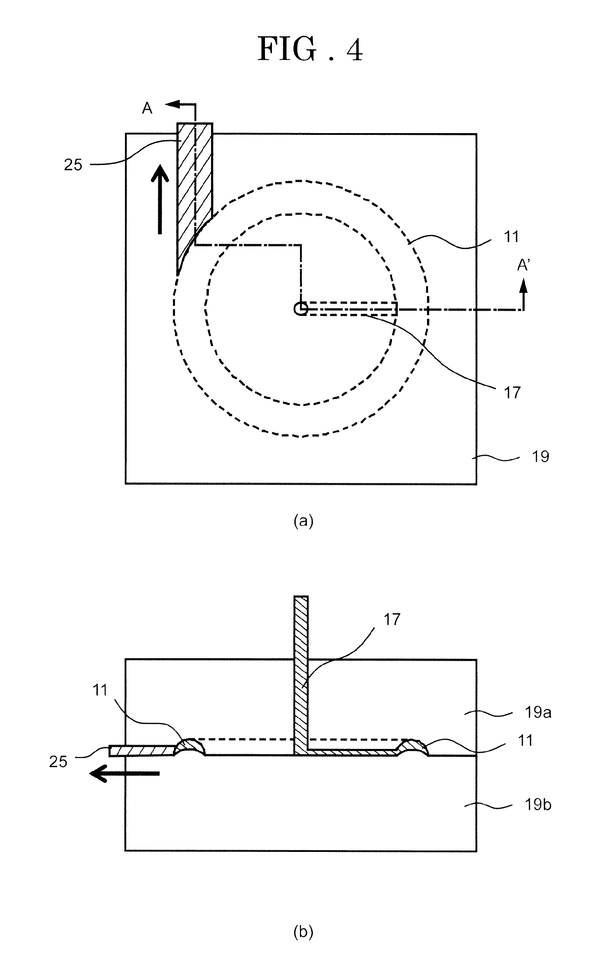

In the injection molding method related to the present invention, the arrangement of the pulling mechanism 15 with respect to the first gap 11, that is, the arrangement of the pulling mechanism 15 is not limited to the rear surface of the design surface of the injection molded article and may be arranged on the side surface of the injection molded article as is shown in Fig.4.

In the present embodiment, negative pressure is produced where the second gap 13 occurs by pulling a part of the molding material 3 into the second gap 13 by arranging the pulling mechanism 25 in the side surface direction of an injection molded article, thereby it is possible to suppress the occurrence of the weld line 9 and flow line by moving the filler 1 and molding material 3 not only at the fluid layer 5 but also near the surface layer 7. Furthermore, the pulling mechanism 25 may be a structure wherein when the inside exceeds a predetermined pressure by filling the molding material 3 including filler 1 into the first gap 11 the pulling mechanism 25 moves in a horizontal direction and the second gap 13 is produced.

### (Embodiment 3)

In the present invention, a part of the molding material 3 is moved by being pulled into the second gap 13 in order to suppress the weld line 9 and the flow line from occurring. Therefore, by arranging the pulling mechanism in a position for forming ribs or bosses of an injection molded article and pulling a part of the molding material 3 into the second gap 13, it is possible to simultaneously mold a rib or boss.

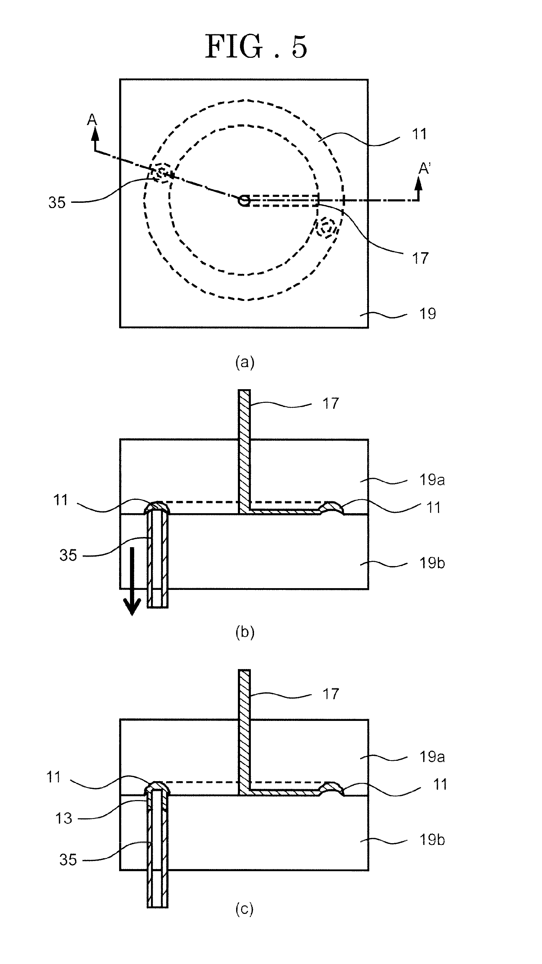

Fig. 5 is a schematic diagram showing an injection molding method related to one embodiment of the present invention. As is shown in Fig. 5(a), in the present embodiment when the molding material 3 joined from different directions in the first gap 11 is in close contact, pulling mechanism 35 is arranged so as to be misaligned to either side with respect to the joining position in order to pull the molding material 3 including filler 1.

As is shown in Fig. 5(b), the pulling mechanism 35 is arranged in a position for forming a rib or boss. The pulling mechanism 35 is arranged in a shape capable of forming a rib or boss. For example, although a hollow cylindrical shape is given as an example, the present invention is not limited to this.

As is shown in Fig. 5(a), when molding material 3 including filler 1 flows from the injection hole 17 into the mold 19, pulling mechanism 35 takes a position near the first gap 11 to the extent that the second gap 13 occurs or slightly occurs. When the molding material 3 which joins from different directions in the first gap 11 are in first close contact, for example, the pulling mechanism 35 is pulled downward by a driving mechanism arranged externally, the second gap 13 is produced and molding material 3 including the filler 1 is pulled into the second gap 13. In this way, negative pressure is generated, and it is possible to move the filler 1 and molding material 3 in one direction not only at the fluid layer 5 but also near the surface layer 7. In addition, in the present embodiment, it is possible to simultaneously form a rib or boss. Furthermore, a structure is possible wherein when the inside exceeds a predetermined pressure by filling the molding material 3 including filler 1 into the first gap 11, the pulling mechanism 35 moves downwards and the second gap 13 is produced.

### (Embodiment 4)

In one embodiment, it is possible to provide desired strength and electrical conductivity to an injection molded article by using the injection molding method related to the present invention described above. In the present embodiment, it is possible to use talc (mica, isinglass, etc.), glass fibers, carbon fibers, carbon nanotubes and the like described above as the filler. In particular, glass fibers, carbon fibers, carbon nanotubes, etc. can provide an injection molded article with high strength due to the orientation of the weld line, by containing in molding material. In addition, carbon fibers, carbon nanotubes, etc. can provide electrical conductivity due to the orientation of the weld line.

Although all thermoplastics such as a polypropylene (PP), ABS resin, polycarbonate (PC), polymethyl methacrylate resin (PMMA), nylon (PA), polyoxymethylene (POM), polyphenylene sulfide resin (PPS) and polyether ether ketone (PEEK) can be used as the molding material used in the present embodiment, the present invention is not limited to these.

The contained amount of filler included in the molding material is not particularly limited, the content of the filler to be contained in the molding material can be arbitrarily set according to the strength and electrical conductivity required for the injection molded article.

Conventionally, since a filler is oriented along the joining surface at a weld line, it was difficult to obtain sufficient strength and electrical conductivity even when the filler described above is included. On the other hand, the injection molded article related to the present embodiment can be realized with unprecedented improved strength and electrical conductivity by moving a filler and molding material by pulling not only at a fluid layer but also near to a surface layer in one direction due to orientation of a weld line to suppress weld lines and flow lines from occurring.

### EXAMPLES

### (Weld line)

An injection molded article using the injection molding method related to the present invention was formed as Examples 1 and 2. In addition, an injection molded article using a conventional manufacturing method was formed as Comparative Examples 1 and 2. In Examples 1 and 2 and Comparative Examples 1 and 2, a molding material obtained by adding a filler of aluminum (Al) in polypropylene (PP) dissolved at 220ºC was used. As Examples 1 and 2, injection molding was performed using the injection molding method related to the present invention described above in a state where a mold was heated to 80ºC. As Comparative Examples 1 and 2, injection molding was performed without operating the pulling mechanism 35 in a state where the same mold as in the Example was heat to 80ºC.

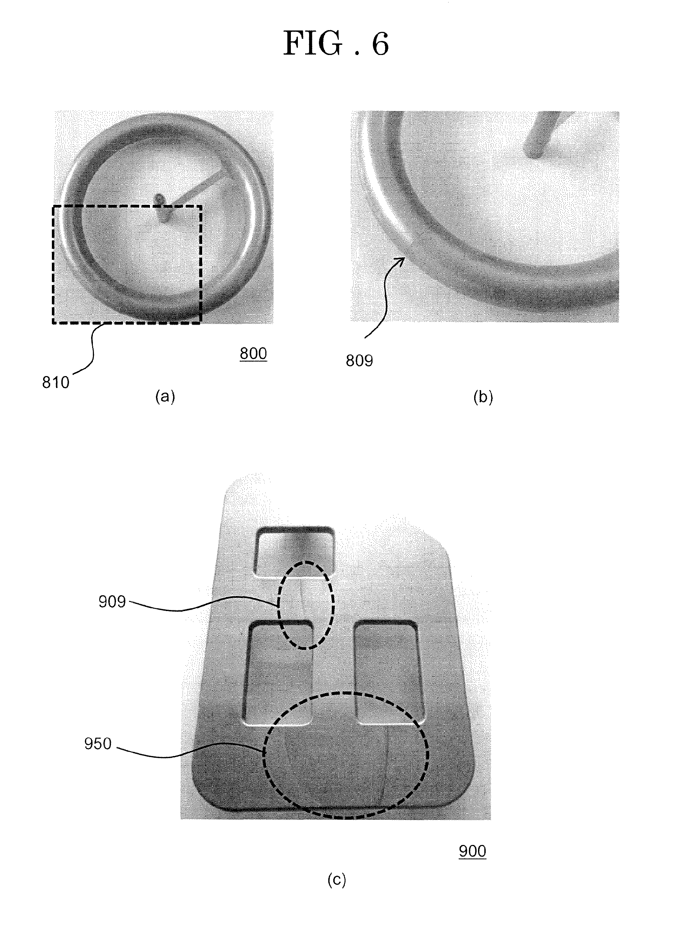

Fig. 6 is a diagram showing the Comparative Examples 1 and 2 formed by a conventional injection molding I method. Fig. 6(a) shows the injection molded article 800 of Comparative Example 1 Fig. 6(b) is an enlarged view of the part 810 in Fig. 6(a), and Fig. 6(c) shows a molded article 900 of Comparative Example 2. As can be seen from Fig. 6(b), weld line 809 was confirmed in the injection molded article 800 of Comparative Example 1 formed by the conventional injection molding method. In addition, weld line 909 and flow line 950 were confirmed in the injection molded article 900 of Comparative Example 2 shown in Fig. 6(c).

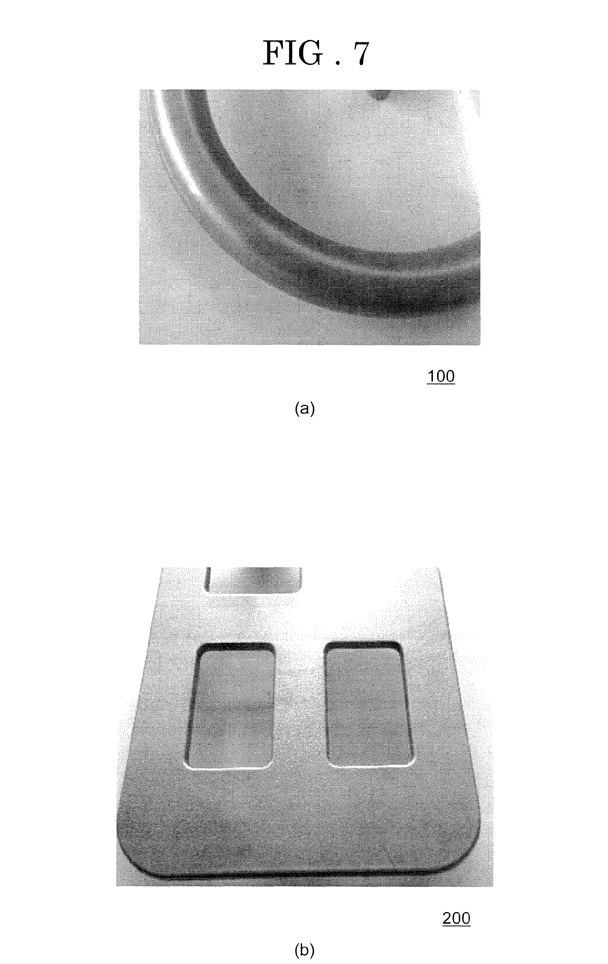

However, as is shown in Fig. 7(a), a clear weld line in such as in Comparative Example 1 was not confirmed in the injection molded article 100 of the Example 1 formed using the injection molding method related to the present invention. In addition, in the injection-molded article 200 of Example 2, as shown in Fig. 7(b), clear weld lines or flow lines were not confirmed as in Comparative Example 2.

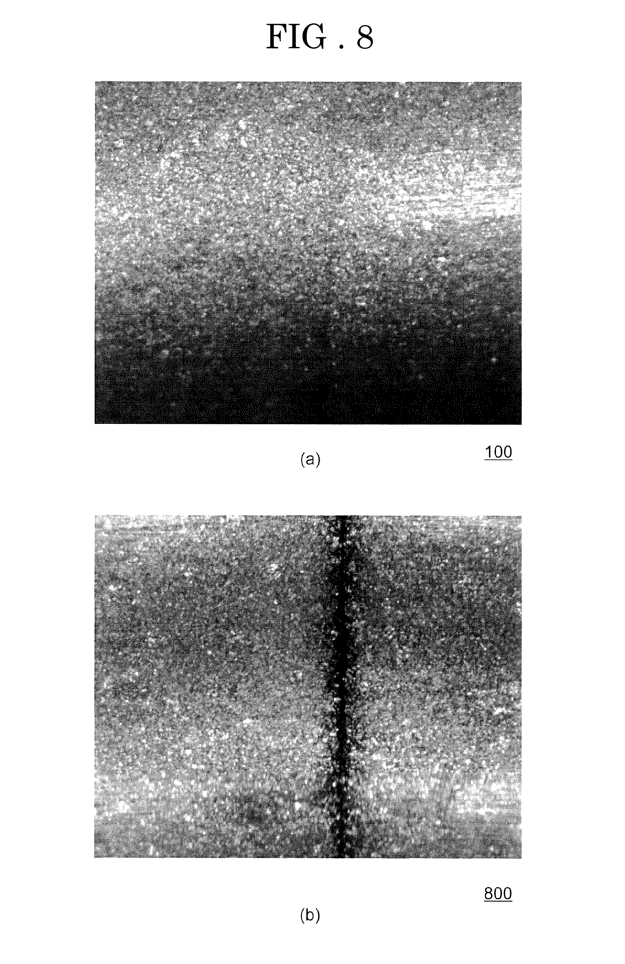

Fig. 8 is an optical microscope image obtained by observing a weld line of the injection molded article of Example 1 and Comparative Example 1. Fig. 8(a) shows the injection molded article 100 of Example 1, and Fig. 8(b) shows an injection molded article 800 of Comparative Example 1. As can be seen from Fig. 8, it is possible to significantly suppress weld lines from occurring by using the injection molding method related to the present invention.

Furthermore, instead of the polypropylene described above, the same results were obtained in the case of using ABS resin (230ºC of melting temperature), nylon 6 (PA6) (235ºC of melting temperature), and an alloy material of polycarbonate and ABS resin (250ºC of melting temperature).

In addition, JIS K7139 multipurpose test piece (ISO dumbbell type A1) was formed by the injection molding method related to the present invention to obtain a molded product 300 by adding talc as a filler to polypropylene as Example 3. A molded article 1000 was formed using a conventional 2-point gate molding method as Comparative Example 3, and a molded article 1100 forming a resin reservoir by pulling in advance the pulling mechanism of Example 3 as a reference example.

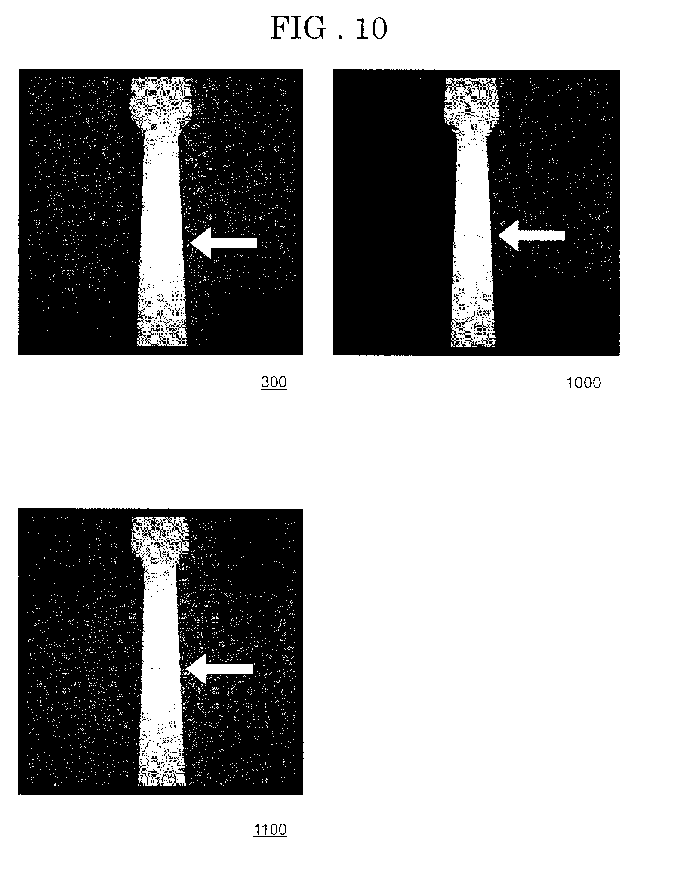

Fig. 10 shows an injection molded article related to one embodiment of the present invention. The appearance was evaluated with respect to planarization of a raised shape due to the orientation of the talc generated in a weld indicated by the arrow. The evaluation of appearance was carried out visually and tactilely. In the visual evaluation and tactile evaluation, raising due to a weld line was not detected in molded article 300 of Example 3. In addition, the orientation of the talc in the weld line such that visible light passes through was not detected.

On the other hand, raising due to a weld line was detected in the molded article 1000 of Comparative Example 3 in a visual evaluation and tactile evaluation. In addition, visible light passed through at the weld line and orientation of the talc perpendicular to the flow direction of the material was detected. In the molded article 3 of the reference example, although the orientation of the talc in the weld line so that visible light passes through was not detected, raising due to a the weld line was detected in the visual evaluation and tactile evaluation.

### (Tensile strength)

30% by weight of carbon fiber (Toray TORAYCA TLP1060) was added to nylon 6 (PA6), a JIS K7139 multipurpose test piece a (ISO dumbbell type A1) was formed using the injection molding method related to the present invention and the molded article of Example 4 was obtained. In addition, a molded article of Comparative Example 4 was formed using a conventional 2-point gate molding method. In compliance with IS0527-1, -2, tensile characteristics tension, TEST SPEED: 5mm/min, n = 5, 23ºC, was measured at 50% humidity. The measurement results are shown in Table 1.

**TABLE 1**

| | |
|---|---|
| Example 4 | 239 MPa (Maximum value: 250 MPa, Minimum value: 232 MPa) |
| Comparative Example 4 | 57 MPa (Maximum value: 59 MPa, Minimum value: 54 MPa) |

As is shown in Table 1, Example 4 formed using the injection molding method related to the present invention showed a tensile strength 4.2 times that of the Comparative Example 4 formed using a conventional method. From these results, it can be seen that it is possible to realize a significant improvement in strength by significantly suppressing the occurrence of weld lines by using the injection molding method related to the present invention.

### EXPLANATION OF THE SYMBOLS

1: filler, 3: molding material, 5: fluid layer, 7: surface layer, 9: weld line, 10: cavity, 11: first gap, 13: second gap, 15: pulling mechanism, 17: injection hole, 19: mold, 25: pulling mechanism, 35: pulling mechanism, 100: injection molded article, 200: injection molded article, 300: injection molded article, 800: injection molded article, 809: weld line, 810: part, 900: injection molded article, 909: weld line, 950: flow line, 1000: injection molded article, 1100: injection molded article.

## Claims

1. An injection molding method comprising using a mold arranged with a first gap and a pulling mechanism arranged in a second gap connected to the first gap, the method comprising:
placing the pulling mechanism so that a space is not created between the first gap and the pulling mechanism, and filling a molding material containing a filler in the first gap of the mold; and
when the molding material flowing from a first direction of the first gap and the molding material flowing from a second direction different from the first direction are in close contact, pulling a part of the molding material into the second gap by pulling the pulling mechanism.

2. The injection molding method according to claim 1, wherein the filler has an anisotropic shape.

3. The injection molding method according to claim 1, wherein pulling a part of the molding material into the second gap by pulling the pulling mechanism is carried out by applying negative pressure to the second gap.

4. The injection molding method according to claim 1, wherein a part of the molding material filled in the first gap is pulled into the second gap to form a rib or boss.

5. The injection molding method according to claim 1, wherein pulling a part of the molding material to the second gap by pulling the pulling mechanism is achieved by pulling the filler and the molding material near a surface layer to the second gap side.

6. An injection molded article formed by the method according to claim 1.
